Europäisches Patentamt

European Patent Office

Office européen des brevets

(19)

(11) Veröffentlichungsnummer: **0 264 154**
**A2**

(12) **EUROPÄISCHE PATENTANMELDUNG**

(21) Anmeldenummer: **87201936.9**

(51) Int. Cl.⁴: **C03B 37/018**

(22) Anmeldetag: **09.10.87**

(30) Priorität: **15.10.86 DE 3635034**

(43) Veröffentlichungstag der Anmeldung:
**20.04.88 Patentblatt 88/16**

(84) Benannte Vertragsstaaten:
**DE FR GB IT NL SE**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL SE**

(72) Erfinder: **Geittner, Peter, Dr.**
**Ronheider Weg 26**
**D-5100 Aachen(DE)**
Erfinder: **Lydtin, Hans, Dr.**
**Am Göpelschacht 9**
**D-5190 Stolberg(DE)**
Erfinder: **Wilson, Howard**
**Königsbergerstrasse 32**
**D-5100 Aachen(DE)**

(74) Vertreter: **Piegler, Harald, Dipl.-Chem. et al**
**Philips Patentverwaltung GmbH**
**Wendenstrasse 35 Postfach 10 51 49**
**D-2000 Hamburg 1(DE)**

(54) Verfahren zur Herstellung von Lichtleitfasern.

(57) Lichtleitfasern, deren Brechungsindexprofile definierte periphere und/oder radiale und/oder axiale optische Modulationsstrukturen aufweisen, werden nach dem PCVD-Verfahren hergestellt, wobei solche Verfahrensparameter variiert werden, welche

(a) die Gleichmäßigkeit des Materialtransports zur Rohrinnenwand und/oder der Abscheidungsausbeuten des Glases über den Rohrumfang und/oder

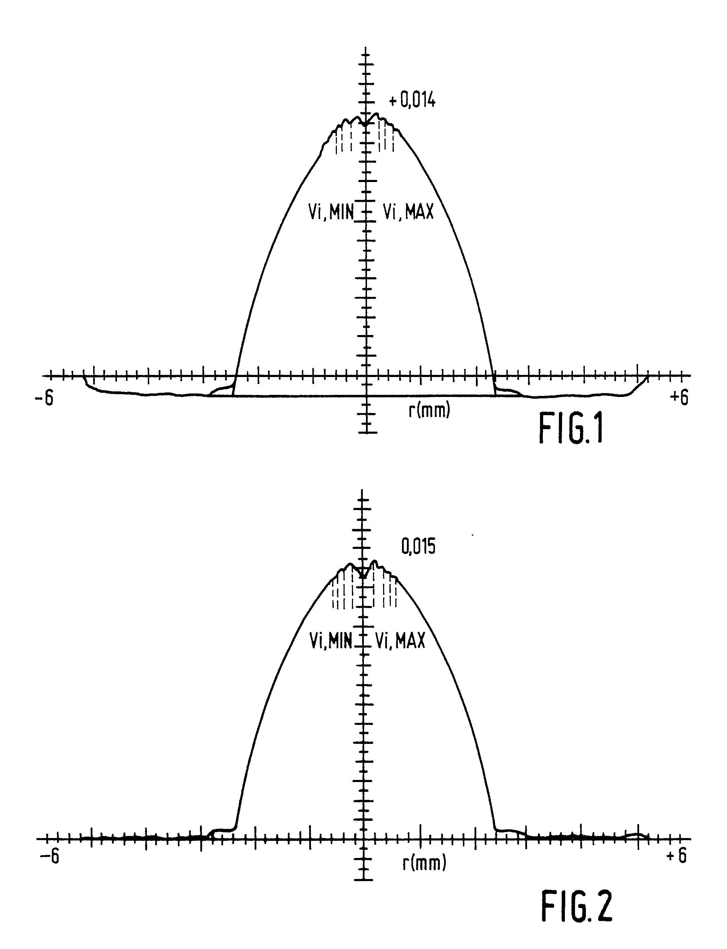

(b) die axiale Position der lokalen Abscheidungszone in bezug auf den das Plasma erzeugenden Reaktor beeinflussen. Fig. 1

FIG.1

## Verfahren zur Herstellung von Lichtleitfasern

Die Erfindung betrifft ein Verfahren zur Herstellung von Lichtleitfasern, deren Brechungsindexprofile definierte periphere und/oder radiale und/oder axiale optische Modulationsstrukturen aufweisen, durch Innenbeschichten eines Glasrohres mit Glas durch chemische Abscheidung aus der Gasphase, wobei während des Innenbeschichtens ein oder mehrere Abscheidungsparameter variiert werden, Kollabieren des Glasrohres zu einem Stab und Ausziehen des Stabes zur Faser.

Unter Lichtleitfasern, deren Brechungsindexprofile die zuvor genannten Modulationsstrukturen aufweisen, sind in diesem Zusammenhang insbesondere Multimodenfasern mit einer Längenabhängigkeit der Übertragungsbandbreite entsprechend etwa der Quadratwurzel aus der Faserlänge, sowie Monomodefasern mit polarisationserhaltenden Eigenschaften über große Faserlängen zu verstehen.

Beim Einsatz von Multimodenfasern lassen sich hohe Übertragungsbandbreiten realisieren, wenn deren Brechungsindexprofile einen idealen vorausberechenbaren Verlauf aufweisen, der über die gesamte Faserlänge, insbesondere hinsichtlich der Rotationssymmetrie, konstant ist. Diese Anforderungen können derzeit mit allen bekannten Herstellungsverfahren nur begrenzt erfüllt werden. Abhängig vom jeweiligen Verfahren treten nämlich systematische radiale Profilfehler (Dip, Lagenstruktur usw.), Rotationsasymmetrien und axiale Fluktuationen auf, die die Übertragungsbandbreiten von GradientenindexMultimodenfasern im Realfall typischerweise auf weniger als ein Zehntel der theoretisch möglichen Werte begrenzen.

Der Einfluß derartiger Profilfehler auf das Übertragungsverhalten kann allerdings dadurch reduziert werden, daß den Brechungsindexprofilen periodische Modulationen in radialer und/oder axialer Richtung mit exakt definierten Modulationsamplituden und -frequenzen aufgeprägt werden. Diese Modulationen können gleichzeitig dazu führen, daß die Übertragungsbandbreite nicht mehr linear, sondern nur noch entsprechend der Quadratwurzel der Faserlänge abnimmt (Appl.Opt. 20 (1981) 2314-2318; DE-B-2 733 872).

Ein derartiges Verhalten ist insbesondere bei Übertragungen über große Streckenlängen wünschenswert, wie das folgende Beispiel verdeutlicht: Bei Verwendung von Gradientenindex-Multimodenfasern mit einem BandbreitenLängen-Produkt von jeweils 1,2 GHz.km beträgt die totale Übertragungsbandbreite in einem System mit 18 km Streckenlänge im Fall einer linearen Dispersionscharakteristik nur etwa 65 MHz, im Fall einer Dispersion mit einer Quadratwurzel-Abhängigkeit von der Faserlänge dagegen etwa 280 MHz. Fasern mit idealen rotationssymmetrischen und längenkonstanten Brechungsindexprofilen weisen aber aufgrund der intrinsischen Leitungsbedingungen eine ungünstige, d.h. lineare Pulsverbreiterung auf. Deshalb ist auch bei idealen Profilen das Aufprägen definierter Profilmodulationen wünschenswert. Dies würde zu einer Verbesserung der System-Übertragungseigenschaften führen.

Bei der Abscheidung nach dem MCVD-, OVPD-und VAD-Verfahren werden generell Profilfluktuationen erzeugt, die verfahrensintrinsisch sind. Diese Profilfluktuation beeinflussen die Leitungseigenschaften teils ungünstig, z.B. über Profilapproximationen mit niedrigen Lagenzahlen, teils aber auch günstig in der gewünschten Richtung, z.B. über helixförmige Profilmodulationen beim VAD-Prozeß (Appl.Opt. 20 (1981) 2314-2318). Den zuvor genannten Verfahren ist jedoch gemeinsam, daß diese Modulationen zwangsläufig auftreten und nicht durch eine definierte freie Variation der Verfahrensparameter den theoretisch geforderten optimalen Modulationsstrukturen angepaßt werden können. Die Gründe hierfür liegen in den Verfahren selbst, insbesondere in der Notwendigkeit des Einschmelzens der homogen in der Gasphase erzeugten Rußpartikel. Dies führt prinzipiell zu ausgedehnten Abscheidungsbereichen, einer hohen thermischen Trägheit und der Notwendigkeit einer kontinuierlichen Rotation des Substratrohres während der Abscheidung. Bei der Abscheidung nach dem PCVD-Verfahren (z.B. US-E-30 635 und US-A-4 314 833) entfallen diese Nachteile; insbesondere ist eine lokale, trägheitslose Abscheidung bei niedrigen Substrattemperaturen auch ohne Drehung des Substratrohres und ohne Anwendung eines Sinterschritts für das abgeschiedene Material möglich. Bekannt ist jedoch nur, daß mit diesem Verfahren insbesondere Brechungsindexprofile mit hoher Rotationssymmetrie und nahezu idealem radialem Profilverlauf hergestellt werden können, wobei Profilfluktuationen weitgehend vermieden werden (EP-A-0 132 011).

Für bestimmte Anwendungsbereiche, z.B. optische Sensoren und breitbandige Nachrichtenübertragung, ist es wünschenswert, Monomode-Lichtleitfasern mit Profilstrukturen herzustellen, die den Polarisationszustand des eingekoppelten Lichts aufrechterhalten. In derartigen Profilstrukturen weisen die Kerngeometrie oder das Brechungsindexprofil konstant über die gesamte Faserlänge eine ausgeprägte elliptische, im allgemeinen nicht rotationssymmetrische Verteilung auf, was theoretisch zu einer Unterdrückung der sonst vorliegenden Polarisationsdispersion führen sollte. Die bislang bekannten Verfahren zur Herstellung derartiger Strukturen über spannungsoptische Asymmetrien oder nachträgliche Veränderung der Geometrie des abgeschiedenen Materials (z.B. entsprechend EP-A-0 067 017) sind jedoch sehr zeitaufwendig und damit kostenintensiv, oder nur beschränkt wirksam.

Aufgabe der Erfindung ist es, ein Verfahren anzugeben, welches eine definierte und einfache Herstellung der gewünschten optischen und/oder geometrischen Profilmodulationen für Multimoden-Gradientenfasern und der optischen und/oder geometrischen Asymmetrien für MonomodeFaserstrukturen ermöglicht.

Diese Aufgabe wird erfindungsgemäß dadurch gelöst, daß bei einem Verfahren der eingangs genannten Art das Innenbeschichten nach dem PCVD-Verfahren vorgenommen wird, wobei solche Verfahrensparameter variiert werden, welche die Gleichmäßigkeit des Materialtransports zur Rohrinnenwand und/oder der Abscheidungsausbeuten des Glases über den Rohrumfang beeinflussen.

Bei einer Abwandlung des erfindungsgemäßen Verfahrens wird das Innenbeschichten ebenfalls nach dem PCVD-Verfahren vorgenommen, wobei jedoch solche Verfahrensparameter variiert werden, welche die axiale Position der lokalen Abscheidungszone in bezug auf den das Plasma erzeugenden Reaktor beeinflussen.

Vorteilhafte und zweckmäßige Ausgestaltungen und Weiterbildungen des erfindungsgemäßen Verfahrens sind in den Unteransprüchen angegeben.

So kann bei der erstgenannten Ausführungsform des erfindungsgemäßen Verfahrens eine gezielte Abscheidungs asymmetrie von $SiO_2$ und Dotierungsmaterial über den Umfang, d.h. bei einem gegebenen Winkel, durch das Vorgeben einer definierten äußeren Rotationsasymmetrie der Temperaturverteilung und/oder einer azentrischen Anordnung des Substratrohres im Plasma-Reaktor erzwungen werden.

Die Lage dieser Asymmetrie kann nun zusätzlich durch eine Drehbewegung des Substratrohres während der Abscheidung von Lage zu Lage des abgeschiedenen Materials diskret oder kontinuierlich verändert werden, was letztlich zu den gewünschten Modulationen oder Asymmetrien der Geometrie und/oder des Brechungsindexprofils führt. Dabei kann die Anzahl der Modulationen in radialer Richtung im wesentlichen durch das Verhältnis von Rotations-zu Hubfrequenz, die Amplitude der Modulationen durch das Ausmaß der aufgeprägten äußeren Temperaturasymmetrie oder der Dezentrierung des Rohres und die Struktur der Modulationen durch die Art der Drehbewegung (diskret oder kontinuierlich) vorgegeben werden.

Eine diskrete Drehung des Substratrohres um Winkelsegmente $\Delta\varphi$ pro Hub führt zu Profilmodulationen in radialer Richtung, die über der Beschichtungslänge konstant sind, wogegen eine kontinuierliche Drehung des Rohres generell radiale Modulationen erzeugt, deren Amplitude über die Beschichtungslänge variiert. Vorteilhaft ist dabei die Tatsache, daß bei der Abscheidung nach dem PCVD-Verfahren das Substratrohr nicht zwangsläufig gedreht werden muß und außerdem eine im Vergleich zu anderen Verfahren hohe Anzahl von diskreten Lagen des Kernmaterials abgeschieden werden kann. Damit ist eine freie Wahl der Art der Rotation und der Anzahl der Profilmodulationen über den Kernbereich in radialer und axialer Richtung möglich.

Axiale Profilmodulationen und/oder geometrische periodische Fluktuationen können nach der obengenannten Abwandlung des erfindungsgemäßen Verfahrens insbesondere derart hergestellt werden, daß die Leistung des Mikrowellengenerators und/oder der Druck am Abscheidungsort während der Abscheidung zeitlich periodisch variiert werden. Hierbei wird die Tatsache ausgenutzt, daß sowohl die Lage, d.h. der Ort der momentanen Abscheidungszone, als auch die Abscheidungsausbeuten für Dotierung und $SiO_2$-Trägermaterial von der Plasmaleistung und vom Druck abhängen.

Die Anzahl der Modulationen in axialer Richtung kann im wesentlichen über das Verhältnis von Modulations-zu Hubfrequenz vorgegeben werden, während die Modulationsamplitude über das Ausmaß der Modulation von Mikrowellenleistung und/oder Druck vorgegeben werden kann. Es ist vorteilhaft, beim Anbringen rein axialer Profilmodulationen das äußere Temperaturfeld oder die Drehbewegung so zu wählen, daß keine zusätzlichen radialen Modulationen erzeugt werden. Wird die Modulationsfrequenz so gewählt, daß sie ein ganzzahliges Vielfaches der Hubfrequenz beträgt, werden reine axiale Profilmodulationen und/oder geometrische Fluktuationen mit fester Periodenlänge erzeugt. Wird die Modulationsfrequenz der Plasmaleistung oder des Druckes dagegen so gewählt, daß sie geringfügig von einem ganzzahligen Vielfachen der Hubfrequenz abweicht, mitteln sich geometrische Modulationen über die Länge aus. In diesem Fall entstehen jedoch axial variable Modulationen des optischen Brechungsindexprofils in radialer Richtung.

Mit dem erfindungsgemäßen Verfahren lassen sich ferner polarisationserhaltende Monomode-Leitungsstrukturen mit starker optischer und/oder geometrischer Elliptizität des Kernbereichs herstellen, indem unter Aufprägung einer maximalen Abscheidungsasymmetrie das Substratrohr während der Abscheidung von Lage zu Lage diskret um Winkel gedreht wird, die ein ganzzahliger Bruchteil einer vollen Drehung sind. Insbesondere bei einer diskreten Winkeldrehung von $\pi$ pro Lage wird so die erwünschte optische und/oder geometrische Kernelliptizität konstant über die volle Länge der Abscheidungszone erreicht. Eine weitere Möglichkeit zur Erzielung derartiger elliptischer Strukturen besteht nach dem erfindungsgemäßen Verfahren darin, daß die Abscheidung ohne Drehbewegung erfolgt, wobei jedoch das von außen aufgeprägte Temperaturprofil derart ausgebildet wird, daß an gegenüberliegenden Seiten des Substratrohres eine verstärkte Abscheidungsausbeute erzwungen wird, z.B. durch eine lokale Kühlung. Auch in diesem Falle resultieren daraus elliptische, über die Länge konstante Profilstrukturen.

Das erfindungsgemäße Verfahren läßt sich zusammenfassend in unterschiedliche Gruppen von Kombinationen definiert vorgegebener Modulationen der Abscheidungsparameter ohne oder mit Drehbewegungen aufteilen, wobei mit den unterschiedlichen Kombinationen unterschiedliche Typen von Profilmodulationen hergestellt werden können. Im einzelnen sind folgende Kombinationen und daraus resultierende Profilmodulationen möglich:

A. Ohne Drehbewegung des Substratrohres:

(a) Mit fest von außen aufgeprägter, axial konstanter Temperatursymmetrie $T(\phi)$: Ergibt

1. rotationsasymmetrische Profile und/oder Kerngeometrien, die über die Vorformlänge Z konstant sind,

2. elliptische Profile für Monomode-Anwendungen bei zweifacher Asymmetrie für $T(\phi)$ bei $\phi/\phi + \pi$.

(b) Mit periodischer Druckmodulation $p = f(t)$ und/oder Plasmaleistungsmodulation $P_{MW} = f(t)$: Ergibt

1. periodische optische und/oder geometrische Modulationen über Z, keine Modulationen in radialer Richtung (für $\nu_M = N.\nu_H$, wobei $\nu_M$ = Modulationsfrequenz für p und $P_{MW}$, $\nu_H$ = Hubfrequenz für Abscheidung der individuellen Lagen, N = eine positive ganze Zahl),

2. periodische Profilmodulationen in axialer und radialer Richtung mit Rotationssymmetrie (für $\nu_M \neq N.\nu_H$),

3. periodische Modulationen in radialer Richtung mit Rotationssymmetrie, konstant über Z (für $\nu_M \ll \nu_H$).

(c) Mit periodischer Modulation der Hubfrequenz $\nu_H = f(t)$: Ergibt Modulationen wie (b) 1 bis (b) 3.

(d) Mit periodischer Modulation des Dotierungsgasflusses $\dot{Q}_{Dope} = f(t)$: Ergibt Modulationen wie (b) 1 bis (b) 3, jedoch (b) 1 ohne geometrische Modulationen.

B. Mit Drehbewegung des Substratrohres und von außen definiert vorgegebener Abscheidungsasymmetrie (nichtzentrale Positionierung des Substratrohres oder feste Temperatursymmetrie $T(\phi)$):

(a) Drehbewegung diskret (um feste Winkel $\Delta\phi$ pro Lage, Rohrposition fest während der Abscheidung einer einzelnen Lage): Ergibt

1. nichtrotationssymmetrische periodische Profilmodulationen in radialer Richtung, konstant über Z (für $N.\Delta\phi = 2\pi$; N > 3),

2. nichtrotationssymmetrische elliptische Profile, konstant über Z (für $\Delta\phi = \pi$).

(b) Drehbewegung kontinuierlich ($\phi = f(\nu_R, t)$; $\nu_R$ = Rotationsfrequenz): Ergibt

1. nichtrotationssymmetrische radiale Profilmodulationen, konstant über Z (für $\nu_R \ll \nu_H$ = Hubfrequenz für Abscheidung der individuellen Lagen),

2. periodische Profilmodulationen in radialer und axialer Richtung (für $\nu_R = N.\nu_H$) ohne Rotationssymmetrie,

3. periodische, nichtrotationssymmetrische Profilmodulationen in radialer Richtung, nicht konstant über Z (für $\nu_R \neq N.\nu_H$)

Die Erfindung wird an Hand einer Zeichnung und einiger Ausführungsbeispiele näher erläutert. In der Zeichnung zeigen

Fig. 1 bis 3 Diagramme optischer Brechungsindexprofile von Lichtleitfasern und

Fig. 4 ein Diagramm, in dem die Übertragungsbandbreite in Abhängigkeit von der Faserlänge dargestellt ist.

Beispiel 1

Mehrere Vorformen wurden nach dem PCVD-Verfahren hergestellt, wobei die Bedingungen für die Drehbewegung $\phi(t)$ des Rohres und die aufgeprägte Asymmetrie des Temperaturfeldes $T(\phi)$ von Vorform zu Vorform definiert variiert wurden. Alle übrigen Abscheidungsbedingungen wurden konstant gehalten, insbesondere die zeitlichen Programmabläufe für die Chloridgasflüsse, den Druck, die Temperatur und die Mikrowellen-bzw. Plasmaleistung. Das Substratrohr hatte einen Außendurchmesser von 18 mm und einen Innendurchmesser von 15 mm. Die Abscheidungsbedingungen waren:

Hublänge: $\Delta Z_H = 40$ cm Hubgeschwindigkeit des Resonators: $v_H$ = 8m/min

Substratrohrtemperatur: T = 1220°C

Druck: p = 16 hPa

Plasmaleistung: $P_{MW}$ = 500 W

Chloridgasflüsse (SiCl$_4$ + GeCl$_4$): $\dot{Q}_{tot}$ = 120cm$^3$/min,

bezogen auf Standardbedingungen (0°C, 1000 hPa)

Totale Abscheidungsdauer: $t_{dep}$ = 90 min

Zahl der abgeschiedenen dotierten Lagen: $N_{tot}$ = 1000

Die Fig. 1 bis 3 zeigen optische Brechungsindexprofile, die unter folgenden Bedingungen erzeugt wurden:

(a) Fig. 1: Äußere, einfache Temperatursymmetrie von $\Delta T(\phi) \approx 10°C$ (T($\phi$ min) = 1225°C, T($\phi$ min + $\pi$) = 1215°C) in Verbindung mit einer diskreten Drehbewegung von $\Delta\phi$ = 18° pro Lage; die Zahl der insgesamt abgeschiedenen Kernlagen betrug 1000. Die daraus entsprechend B (a) resultierende Profilmodulation ist deutlich erkennbar. Das Abklingen der Modulationsamplitude zum Profilrand hin ist eine Folge von Diffusionsmechanismen beim Kollabierschritt in Verbindung mit der Tatsache, daß die radiale Massenbelegung im Kern mit $r^2$ zunimmt (r = Radius) und dementsprechend die Abstände benachbarter Modulationsmaxima mit r abnehmen. Die Profilmodulation ist nichtrotationssymmetrisch, d.h. bei gleichen Radien liegt auf einer Profilflanke ein Maximum, auf der anderen dagegen jeweils ein Minimum; die radiale Periodenlänge stimmt mit der erwarteten überein, d.h. bei 1000 Lagen und $\Delta\phi$ = 18° ist N = 20 und es liegen damit 50 Modulationen über dem gesamten Kernradius vor.

(b) Fig. 2: Gleiche Drehbedingungen wie unter (a), jedoch reduzierte äußere Temperatursymmetrie auf $\Delta T(\phi) \approx 5°C$. Bei gleicher radialer Modulationsstruktur ist die Modulationsamplitude sichtbar reduziert.

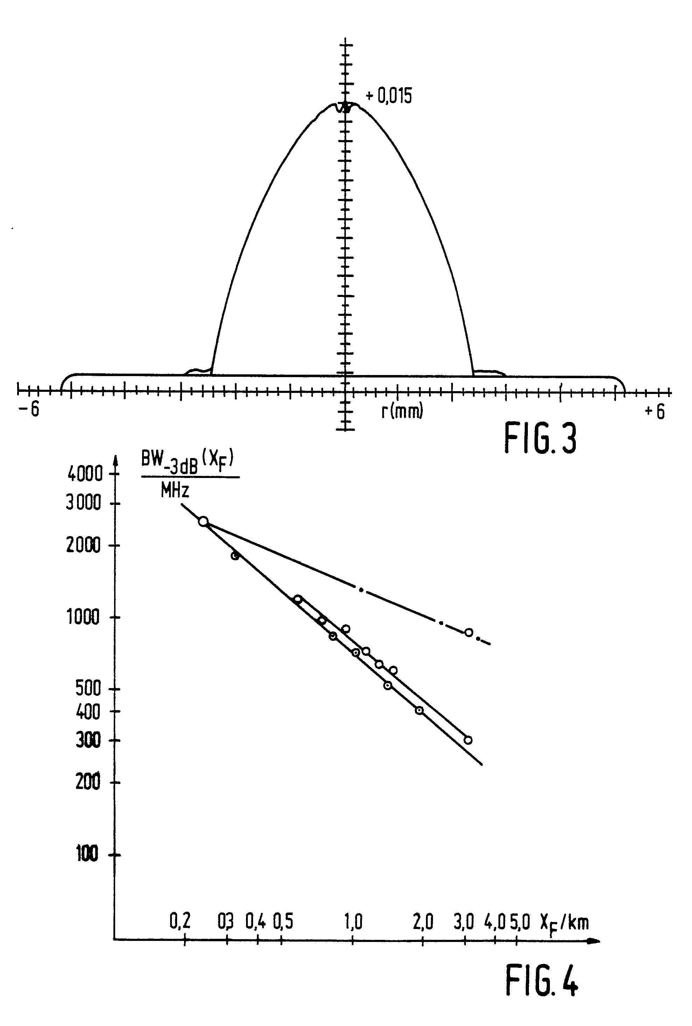

(c) Fig. 3: Profil ohne Aufprägen von Profilmodulationen; ein derartiges Profil sollte zu einer linearen Abhängigkeit der Laufzeitverbreiterung eines optischen Pulses mit der Länge führen, während die Profilmodulationen entsprechend Fig. 1 und 2 zu einer Abhängigkeit mit der Quadratwurzel der Länge führen sollten (vergleiche Beispiel 2).

## Beispiel 2

Es wurden nach dem PCVD-Verfahren Vorformen unter identischen Abscheidungsbedingungen wie im Beispiel 1 hergestellt, wobei in einem Fall nach dem erfindungsgemäßen Verfahren durch diskrete Rotation von $\Delta\phi$ = 30° pro Hub und äußere Temperatursymmetrie nichtrotationssymmetrische

längenkonstante Profilmodulationen aufgeprägt wurden. Fig. 4 zeigt, daß bei Fasern mit derartigen Modulationen (Typ 1) die Übertragungsbandbreite mit der Quadratwurzel der Faserlänge, bei Fasern ohne solche Modulationen jedoch linear mit der Faserlänge $x_F$ abnimmt (Typ 2). Dieses Verhalten entspricht in der gewählten logarithmischen Auftragung von Bandbreite BW($x_F$) gegen Faserlänge $x_F$ Steigungen der entsprechenden Kurven von $\gamma \sim$ 0,5 (Typ 1) und $\gamma \sim$ 1,0 (Typ 2). Bei gleichen Bandbreiten von 2,5 GHz über eine Streckenlänge von etwa 250 m ist die Bandbreite der Faser vom Typ 1 mit nach dem erfindungsgemäßen Verfahren hergestellten Profilmodulationen nach 3 km Streckenlänge bereits um einen Faktor 3 größer als bei den Fasern ohne derartige Profilmodulationen (BW (3km) $\approx$ 900 MHz für Typ 1 und $\approx$ 300 MHz für Typ 2).

## Ansprüche

1. Verfahren zur Herstellung von Lichtleitfasern, deren Brechungsindexprofile definierte periphere und/oder radiale und/oder axiale optische Modulationsstrukturen aufweisen, durch Innenbeschichten eines Glasrohres mit Glas durch chemische Abscheidung aus der Gasphase, wobei ein oder mehrere Abscheidungsparameter während des Innenbeschichtens variiert werden, Kollabieren des Glasrohres zu einem Stab und Ausziehen des Stabes zur Faser, dadurch gekennzeichnet, daß das Innenbeschichten nach dem PCVD-Verfahren vorgenommen wird, wobei solche Verfahrensparameter variiert werden, welche die Gleichmäßigkeit des Materialtransports zur Rohrinnenwand und/oder der Abscheidungsausbeuten des Glases über den Rohrumfang beeinflussen.

2. Verfahren zur Herstellung von Lichtleitfasern, deren Brechungsindexprofile definierte periphere und/oder radiale und/oder axiale optische Modulationsstrukturen aufweisen, durch Innenbeschichten eines Glasrohres mit Glas durch chemische Abscheidung aus der Gasphase, wobei ein oder mehrere Abscheidungsparameter während des Innenbeschichtens variiert werden, Kollabieren des Glasrohres zu einem Stab und Ausziehen des Stabes zur Faser, dadurch gekennzeichnet, daß das Innenbeschichten nach dem PCVD-Verfahren vorgenoemen wird, wobei solche Verfahrensparameter variiert werden, welche die axiale Position der lokalen Abscheidungszone in bezug auf den das Plasma erzeugenden Reaktor beeinflussen.

3. Verfahren nach Anspruch 1, dadurch gekennzeichnet, daß zur Erzielung peripherer optischer Profilmodulationen eine definierte Rotationsasymmetrie des zur Heizung des Rohres verwendeten äußeren Temperaturfeldes vorgegeben wird, wobei Amplitude und Anzahl der Profilmodulationen über dem Rohrumfang durch die Amplitude und die Anzahl von Temperaturvariationen im äußeren Temperaturfeld vorgegeben werden.

4. Verfahren nach Anspruch 1,
dadurch gekennzeichnet, daß zur Erzielung peripherer optischer und geometrischer Profilmodulationen das zu beschichtende Rohr definiert azentrisch in dem das Plasma erzeugenden Reaktor angeordnet wird, wobei die Modulationsamplitude durch das Maß der Exzentrizität bestimmt wird und die Periodenzahl der peripheren Modulationen eins beträgt.

5. Verfahren nach Anspruch 3 oder 4,
dadurch gekennzeichnet, daß die Lage der peripheren Modulationsstrukturen über dem Rohrumfang durch eine Drehbewegung des zu beschichtenden Rohres während der Abscheidung definiert verändert wird, wobei die Drehbewegung kontinuierlich oder in diskreten Schritten dergestalt erfolgt, daß die Frequenz bzw. die Periodenzeit und die Phase der Drehbewegung in vorgegebener Weise mit der Hubfrequenz bzw. der Periodenzeit für das Abscheiden einer einzelnen Schicht und der Phasenlage, also der Position des über dem Rohr hin-und herbewegten Reaktors, korreliert werden, wobei zur Erzielung unterschiedlicher Modulationsstrukturen unterschiedliche, definierte Korrelationen zwischen Drehbewegung und Hubbewegung vorgegeben werden.

6. Verfahren nach Anspruch 3,
dadurch gekennzeichnet, daß zur Erzielung elliptischer optischer Profilstrukturen mit polarisationserhaltenden Eigenschaften ein Temperaturfeld vorgegeben wird, welches über dem Rohrumfang insgesamt zwei Maxima und zwei Minima aufweist, wobei benachbarte Maxima und Minima jeweils um einen Winkel $\pi/2$ gegeneinander versetzt sind.

7. Verfahren nach Anspruch 5,
dadurch gekennzeichnet, daß zur Erzielung elliptischer optischer und geometrischer Profilstrukturen die Drehbewegung des Rohres in diskreten Schritten um jeweils einen Winkel $\pi$ an den Umkehrpunkten des bewegten Reaktors durchgeführt wird und die Frequenz $\nu_D$ der diskreten Drehungen mit der Hubfrequenz $\nu_H$ des Reaktors entsprechend der Beziehung $\nu_D = \frac{1}{N} \cdot \nu_H$ korreliert wird, wobei N eine positive ganze Zahl ist und vorzugsweise zu 1 gewählt wird.

8. Verfahren nach Anspruch 5,
dadurch gekennzeichnet, daß zur Erzielung radialer, nicht rotationssymmetrischer Helix-Profilmodulationen eine einfache, vorzugsweise eng lokalisierte Abscheidungsasymmetrie vorgegeben wird und das Rohr an den Umkehrpunkten des bewegten Reaktors um jeweils gleiche Winkel $\Delta\varphi$ in diskreten Schritten in der Weise gedreht wird, daß bei gleicher Schrittfrequenz und Hubfrequenz der Drehwinkel $\Delta\varphi$ entsprechend der Beziehung $\Delta\varphi = \frac{2\pi}{N}$ gewählt wird, wobei N eine ganze Zahl > 3 ist, welche beim Abscheiden von insgesamt M individuellen Schichten die Gesamtzahl n der radialen periodischen Profilmodulationen entsprechend der Beziehung n = M/N bestimmt.

9. Verfahren nach Anspruch 5,
dadurch gekennzeichnet, daß zur Erzielung radialer, nicht rotationssymmetrischer und in axialer Richtung periodisch veränderter Profilmodulationen eine einfache periphere Abscheidungsasymmetrie vorgegeben wird und das Rohr kontinuierlich und mit einer konstanten Rotationsfrequenz $\nu_R$ derart gedreht wird, daß die Rotationsfrequenz mit der Hubfrequenz $\nu_H$ entsprechend der Beziehung $\nu_R = (N' + \frac{1}{N}) \cdot \nu_H$ korreliert wird, wobei N' und N positive ganze Zahlen vorzugsweise im Bereich > 10 sind, die - bei einer Gesamtzahl von M abgeschiedenen individuellen Schichten - die Gesamtzahl n der radialen periodischen Profilmodulationen entsprechend der Beziehung n = M/N und die Zahl der gleichzeitigen periodischen axialen Profilmodulationen über der gesamten Abscheidungslänge zu N' festlegen.

10. Verfahren nach Anspruch 2,
dadurch gekennzeichnet, daß die im Reaktorbereich in das Plasma eingekoppelte elektrische Mikrowellenleistung zeitlich periodisch variiert wird.

11. Verfahren nach Anspruch 2,
dadurch gekennzeichnet, daß der Druck im Glasrohr zeitlich periodisch variiert wird.

12. Verfahren nach Anspruch 2,
dadurch gekennzeichnet, daß die Hubgeschwindigkeit des über dem Rohr hin-und herbewegten Reaktors zeitlich periodisch variiert wird.

13. Verfahren nach Anspruch 2,
dadurch gekennzeichnet, daß der Sauerstoff-Trägergas-Fluß zeitlich periodisch variiert wird.

14. Verfahren nach Anspruch 2,
dadurch gekennzeichnet, daß die reaktiven Gasflüsse zeitlich periodisch variiert werden.

15. Verfahren nach Anspruch 10 bis 14,
dadurch gekennzeichnet, daß die zeitlich periodische Variation eines oder mehrerer der angegebenen Abscheidungsparameter derart durchgeführt wird, daß die Frequenz und die Phasenlage der Modulation der Abscheidungsparameter in vorgegebener Weise mit der Hubfrequenz und der Phasenlage bzw. der Position des über dem Glasrohr hin-und herbewegten Reaktors korreliert werden, wobei zur Erzielung unterschiedlicher Modulationsstrukturen unterschiedliche definierte Korrelationen zwischen der Modulationsfrequenz der Abscheidungsparameter und der Hubfrequenz des Reaktors vorgegeben werden.

16. Verfahren nach Anspruch 15,

dadurch gekennzeichnet, daß die Modulationsamplituden für die Abscheidungsparameter so vorgegeben werden, daß die daran resultierenden Amplituden $\Delta Z_{mod}$ der Verschiebung der lokalen Abscheidungszone in bezug auf den Reaktor die Bedingung $0 < /\Delta Z_{mod}$ $/ < \frac{1}{2}/\Delta Z_{p}/$ erfüllen, wobei $/\Delta Z_{p}/$ die vom Reaktor im Zeitraum einer ganzen Modulationsperiode zurückgelegte Strecke über dem Rohr ist und $/\Delta Z_{mod}/$ vorzugsweise die Bedingung $/\Delta Z_{mod}/ = \frac{1}{4}/\Delta Z_{p}/$ erfüllt.

17. Verfahren nach Anspruch 15 und 16,

dadurch gekennzeichnet, daß zur Erzielung rotationssymmetrischer, in radialer Richtung unmodulierter und in axialer Richtung optisch und geometrisch periodisch modulierter Profilstrukturen die Korrelation zwischen Modulationsfrequenz für den jeweiligen Abscheidungsparameter, $\nu_M$, und Hubfrequenz $\nu_H$ für die Zahl der Hübe über dem Rohr entsprechend der Beziehung $\nu_M = N' \cdot \nu_H$ vorgegeben wird, wobei die Phasenlage der Modulation zu den Umkehrpunkten um $\pi/2$ gegen die des Reaktorhubs versetzt ist, so daß dort ein Modulationsmaximum oder -minimum vorliegt, und N' eine positive ganze Zahl ist, die gleichzeitig die Anzahl der periodischen axialen Profilmodulationen über der gesamten Abscheidungslänge angibt.

18. Verfahren nach Anspruch 15 und 16,

dadurch gekennzeichnet, daß zur Erzielung rotationssymmetrischer, radial und axial gleichzeitig modulierter Profilstrukturen die Korrelation zwischen Modulationsfrequenz $\nu_M$ für den jeweiligen Abscheidungsparameter und Hubfrequenz $\nu_H$ für die Zahl individueller Hübe entsprechend der Beziehung $\nu_M = (N' + \frac{1}{N})$. $\nu_H$ vorgegeben wird, wobei N' und N positive ganze Zahlen vorzugsweise im Bereich $> 10$ sind, die, bei einer Zahl von M insgesamt abgeschiedenen Schichten, die Gesamtzahl n der radialen periodischen Profilmodulationen entsprechend der Beziehung $n = M/N$ und die Zahl der gleichzeitig erzeugten axialen profilmodulationen über der gesamten Abscheidungslänge zu N' festlegen.

19. Verfahren nach Anspruch 1 und 2,

dadurch gekennzeichnet, daß die Verfahrensmaßnahmen miteinander kombiniert angewendet werden, wobei ein oder mehrere Abscheidungsparameter variiert werden.

+ 0,014

Vi,MIN    Vi,MAX

-6                          r(mm)                        +6

# FIG.1

0,015

Vi,MIN    Vi,MAX

-6                          r(mm)                        +6

# FIG.2

1-II-PHD 86-152

FIG. 3

FIG. 4

2-Ⅱ-PHD86-152